(19)

**Europäisches Patentamt**
**European Patent Office**
**Office européen des brevets**

(11) **EP 2 136 502 A2**

(12) **EUROPEAN PATENT APPLICATION**

(43) Date of publication:
**23.12.2009 Bulletin 2009/52**

(51) Int Cl.:
***H04L 5/00*** (2006.01)

(21) Application number: **09156959.0**

(22) Date of filing: **31.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **17.06.2008 JP 2008157864**<br><br>(71) Applicant: **Fujitsu Ltd.**<br>**Kawasaki-shi, Kanagawa 211-8588 (JP)** | (72) Inventor: **Yokoyama, Hitoshi**<br>**Kawasaki-shi, Kanagawa 211-8588 (JP)**<br><br>(74) Representative: **Fenlon, Christine Lesley**<br>**Haseltine Lake LLP**<br>**Lincoln House, 5th Floor**<br>**300 High Holborn**<br>**London WC1V 7JH (GB)** |

(54) **Channel inserting method, transmitter, and receiver**

(57)     A channel inserting method includes calculating, based on a band of an assigned channel, vacant bandwidth that is assignable to a reference signal; and setting an insertion format of the reference signal based on the vacant bandwidth.

## FIG.8

EP 2 136 502 A2

**Description**

FIELD

The embodiment discussed herein is related to a channel insertion in wireless communication.

BACKGROUND

A system in which user terminals on local area networks (LANs) connected with a wide area network (WAN) utilize limited network bands of the WAN by mutual cooperation is disclosed in, for example, Japanese Laid-open Patent Application No. 2003-244219. The system is characterized by each LAN having a schedule management device that includes a schedule managing unit that provides a user interface for setting a network band schedule, and a band management coordinating unit that executes negotiations concerning band use reservations. When the band management coordinating unit receives information such as planned WAN utilization time slots from a terminal initiating inter-terminal communication through the user interface, the band management coordinating unit supplies band setting data, which includes the input information, to a band management apparatus concerned with inter-terminal communication to execute the negotiations.

In a random access type communication environment, a transmitter that improves a time lag occurring with respect to each packet is disclosed in, for example, Japanese Laid-open Patent Application No. 2006-245958. The transmitter includes a frequency utilization status detecting unit that, based on a received signal, detects a utilization state of an assigned frequency band; a symbol arrangement determining unit that, based on the detection result, determines arrangement of a pilot symbol; and a symbol arranging unit that arranges the pilot symbol according to the determined pilot symbol arrangement.

However, the technology disclosed in Japanese Laid-open Patent Application No. 2006-245958 has a problem in that control accuracy is insufficient since the utilization state of an assigned frequency band is estimated and the assignment cycle of a pilot symbol is controlled according to the estimated utilization state. A further problem exists in that a pilot symbol insertion interval or a pilot symbol band cannot be calculated in advance. Moreover, the pilot symbol insertion interval, the pilot symbol band, etc. cannot be accurately controlled by low frequencies of signaling.

SUMMARY

Accurate insertion of a reference signal with respect to vacant bands within a radio-frequency band is desirable.

According to an aspect of an embodiment, a channel inserting method includes calculating, based on a band of an assigned channel, vacant bandwidth that is assignable to a reference signal; and setting an insertion format of the reference signal based on the vacant bandwidth.

The desirable outcomes and advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF DRAWINGS

Preferred features of the present invention will now be described, purely by way of example, with reference to the accompanying drawings, in which:-

Figs. 1 to 4 are schematics outlining a channel inserting method according to an embodiment;
Fig. 5 is a block diagram of a transmitting station;
Fig. 6 is a block diagram of a user terminal;
Fig. 7 is a block diagram of a management server;
Fig. 8 is a sequence chart for making a new reservation in advance (static method for making a new reservation);
Fig. 9 is a sequence chart of a first reservation method;
Fig. 10 is a sequence chart of a second reservation method;
Fig. 11 is a sequence chart of an example where reservation negotiation fails and a band cannot be assigned;
Fig. 12 is sequence chart of an example where reservation negotiation is successful and a band is dynamically assigned;
Fig. 13 is a flowchart of a resource management method in the management server;
Fig. 14 is a sequence chart when radio path training is executed;
Fig. 15 is a flowchart of a propagation path estimation method;

Fig. 16 depicts examples of corresponding bandwidths of one reference signal and F_th's; and

Fig. 17 is a flowchart of optimization and an insertion format resetting method.

DESCRIPTION OF EMBODIMENT(S)

Preferred embodiments of the present invention will be explained with reference to the accompanying drawings.

According to an embodiment, vacant bands within the band assigned to a common carrier (operator) are obtained based on equation (1), and reference signals are assigned to the vacant bands.

$$[\text{Vacant bandwidth}] = [\text{Bandwidth of operator}] - [\text{Bandwidth of control signal}] - [\text{Bandwidth of all users}] \qquad (1)$$

In the embodiment, the bandwidth assigned to the operator is previously known. The control signal is a signal that manages the state of a wireless format, and is a channel that is determined by standardization or system specifications and can be decoded without signaling. Therefore, the bandwidth of the control signal is previously known. The bandwidth of the control signal may include a reference signal dedicated to the control signal to improve reception accuracy. The bandwidth used by each user is established in advance.

When a reference signal is assigned to a vacant band, a reference signal insertion interval may be specified as an insertion format for the reference signal, or the bandwidth of one reference signal may be specified. A transmitter may previously inform a receiver of the reference signal insertion format, i.e., the bandwidth of one reference signal or the reference signal insertion interval by signaling.

When the bandwidth of one reference signal is specified and signaling is performed, the receiver can obtain the reference signal insertion interval based on equation (2). When the reference signal insertion interval is specified and signaling is performed, the receiver can obtain the bandwidth of one reference signal based on equation (3).

$$[\text{Reference signal insertion interval}] = [\text{Vacant bandwidth}] / [\text{Bandwidth of one reference signal}] \qquad (2)$$

$$[\text{Bandwidth of one reference signal}] = [\text{Vacant bandwidth}] / [\text{Reference signal insertion interval}] \qquad (3)$$

According to the embodiment, the reference signal is assigned to a band within the band assigned to the operator, exclusive of the band assigned to the control signal, users, etc.

An example is described in which a wireless communication system establishes wireless bands for communication and guarantees service quality when a user preliminarily makes a reservation for use of a wireless band. A transmitter is a wireless transceiver at a transmitting station, and a receiver is a wireless transceiver at a user terminal (user equipment). The transmitting station is, for example, a base station.

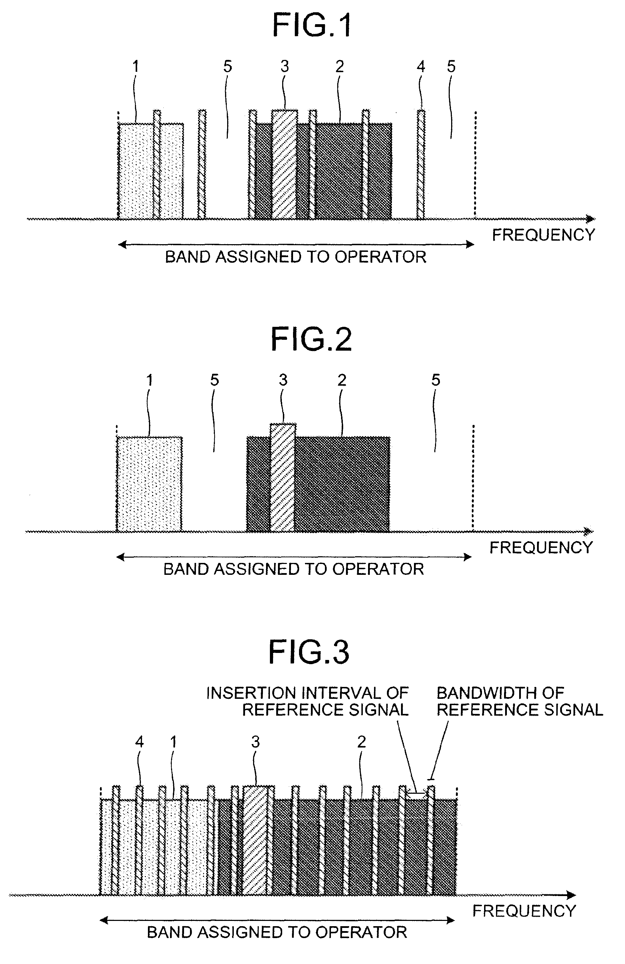

Figs. 1 to 4 are schematics outlining a channel inserting method according to the embodiment. In the drawings, reference numeral 1 denotes the band assigned to a terminal of a user A, and reference numeral 2 denotes the band assigned to a terminal of a user B. Reference numeral 3 denotes the band occupied by a control signal; reference numeral 4, the band occupied by a reference signal; and a reference numeral 5, a vacant band.

As depicted in Fig. 1, when the number of users is small, there are vacant bands 5 within the band assigned to an operator. Thus, in the embodiment, as depicted in Fig. 2, the bandwidth of the vacant bands 5 is calculated based on equation (1) as depicted in Fig. 2, and reference signals are inserted to eliminate the vacant bands 5 as depicted in Fig. 3.

User terminals are informed of a reference signal insertion format by the transmitting station via signaling. Through reception of the signaling, each user terminal can be trained with respect to reference signal arrangement.

When a user terminal is informed of the bandwidth of one reference signal via signaling, the user terminal can calculate the reference signal insertion interval based on equation (2). Alternately, when a user terminal is informed of the reference signal insertion interval via signaling, the user terminal can calculate the bandwidth of one reference signal based on equation (3).

Each user terminal must know the position, within the band assigned to the operator, of any one of the reference signals and can be informed of the position via signaling adopting a conventional technology, or the position can be determined according to system specifications.

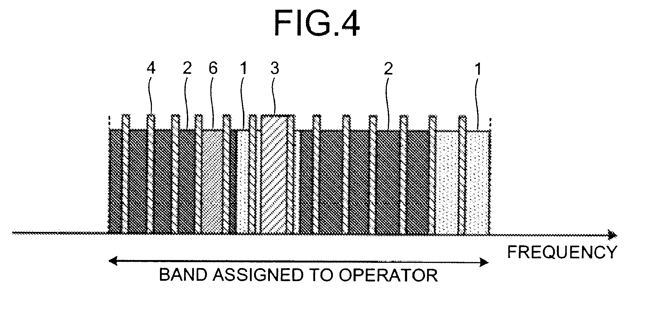

In Fig. 4, reference numeral 6 denotes band occupied by a scheduler control signal (hereinafter, "scheduler control signal band"). As depicted in Fig. 4, when the scheduler control signal is introduced and an assigned frequency of each user terminal is specified, a scheduling gain (multi user diversity) can be obtained. The scheduler control signal band 6 is known since it is determined based on the number of the user terminals that perform communication within a cell at a given time.

The number of the users who reserve a wireless band for utilization, the bands reserved by users, etc. usually varies by time slot. Therefore, vacant bandwidth is recalculated according to the bands used by the users, and the reference signal insertion format is updated. The same is true, for example, when a user is dynamically added.

In general, the reference signal insertion format affects error characteristics of the user terminals. For example, as an index of frequency characteristics in a radio path, there is frequency selectivity. Thus, the reference signal insertion format may be set after training with respect to the radio path. In this case, each user terminal calculates the frequency selectivity by using a default reference signal and informs the transmitting station of the frequency selectivity. The transmitting station resets the reference signal insertion format based on the user terminal having the worst characteristics among user terminals performing communication at the time.

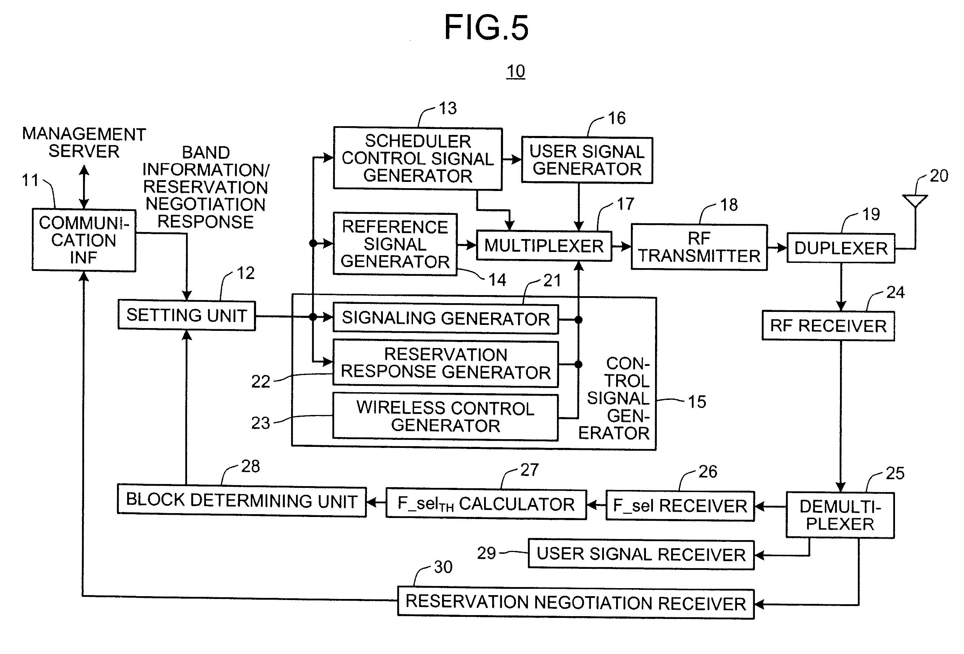

Fig. 5 is a block diagram of the transmitting station. As depicted in Fig. 5, a transmitting station 10 includes a communication interface (communication INF) 11, a setting unit 12, a scheduler control signal generator 13, a reference signal generator 14, a control signal generator 15, a user signal generator 16, a multiplexer 17, an RF transmitter 18, a duplexer 19, and an antenna 20.

The communication interface 11 communicates with a management server via a general-purpose or special communication protocol, and receives from the management server, information concerning vacant bands, information concerning N user terminals to which bands are assigned, and the latest information concerning the scheduler control signal band. In the example, N is the number of the user terminals to which bands have been assigned. When the communication interface 11 assists reservation negotiation between the user terminal and the management server, the communication interface 11 receives the latest information indicative of a response concerning the reservation negotiation from the management server. The communication interface 11 notifies the setting unit 12 of the information received from the management server.

The setting unit 12 sets band assignment for each channel based on the information from the communication interface 11 and sends band assignment information to the scheduler control signal generator 13, the reference signal generator 14, and the control signal generator 15. The control signal generator 15 includes a signaling generator 21, a reservation response generator 22, and a wireless control generator 23.

The signaling generator 21 generates a signal that informs each user terminal of a reference signal insertion format, a scheduler control signal insertion format, etc. based on information concerning frequency, band, etc. received from the setting unit 12. The reservation response generator 22 generates a signal that notifies a user terminal that has newly applied for a reservation of an application result based on a reservation negotiation response received from the setting unit 12. The wireless control generator 23 generates a control signal that comprehensively manages a wireless state similar to conventional technology. The control signal generator 15 sends signals respectively generated at the signaling generator 21, the reservation response generator 22, and the wireless control generator 23 to the multiplexer 17.

The reference signal generator 14 generates a propagation path training signal according to the reference (frequency-, band-, etc.) signal insertion format received from the setting unit 12, and sends the generated signal to the multiplexer 17. The scheduler control signal generator 13 generates a scheduler control signal reflecting the scheduling of the N user terminals at arrangement positions according to the scheduler (frequency-, band-, etc.) control signal insertion format received from the setting unit 12, and sends the generated signal to the multiplexer 17 and the user signal generator 16.

The user signal generator 16 generates a user signal according to a frequency-, band-, etc. format, or a modulation scheme specified by the scheduler control signal, and sends the generated signal to the multiplexer 17. The multiplexer 17 receives and multiplexes signals transmitted from the reference signal generator 14, the scheduler control signal generator 13, the control signal generator 15, and the user signal generator 16 and sends the multiplexed signal to the RF transmitter 18. The RF transmitter 18 up-converts a baseband signal transmitted from the multiplexer 17 into a carrier frequency, and transmits the signal from the antenna 20 through the duplexer 19.

The transmitting station 10 further includes an RF receiver 24, a demultiplexer 25, an F_sel receiver 26, an F_$sel_{TH}$ calculator 27, a block determining unit 28, a user signal receiver 29, and a reservation negotiation receiver 30. A signal received by the antenna 20 is transmitted to the RF receiver 24 via the duplexer 19. The RF receiver 24 down-converts the signal, which has a carrier frequency, from the duplexer 19 into a baseband signal, and sends the baseband signal to the demultiplexer 25.

The demultiplexer 25 demultiplexes the baseband signal from the RF receiver 24 according to channel. The F_sel receiver 26, based on the signals demultiplexed by the demultiplexer 25, determines whether a user terminal that has reported the F_sel to be large is present. The F_sel is an index indicative of a degree of degradation in frequency selectivity phasing and is calculated by the user terminal based on the reference signal. When a user terminal that has reported a large F_sel is present, the $F\_sel_{TH}$ calculator 27 performs a calculation based on a predetermined algorithm to extract the most degraded F_sel, and notifies the block determining unit 28 of the extracted index as $F\_sel_{TH}$.

The block determining unit 28 derives the bandwidth of one reference signal suitable for the $F\_sel_{TH}$ based on the $F\_sel_{TH}$ received from the $F\_sel_{TH}$ calculator 27, and notifies the setting unit 12 of the bandwidth derived. A relationship between $F\_sel_{TH}$ and the bandwidth of one reference signal is obtained based on, for example, simulation in advance. It is generally known that narrowing the bandwidth of one reference signal is favorable when degradation in frequency selectivity phasing is severe.

The setting unit 12 determines whether the current reference signal insertion format should be changed based on the bandwidth of one reference signal reported by the block determining unit 28. Upon determining that the format should be changed, the setting unit 12 issues an instruction to change the reference signal insertion format.

The user signal receiver 29 decodes the user signal demultiplexed by the demultiplexer 25. As a decoding technology, a known technology may be applied. When there is a user terminal that has newly applied for reservation negotiation, the reservation negotiation receiver 30 makes an inquiry via the communication interface 11 to the management server concerning band availability with respect to the reservation. The reservation response generator 22 sends a response to inquiry to the user terminal.

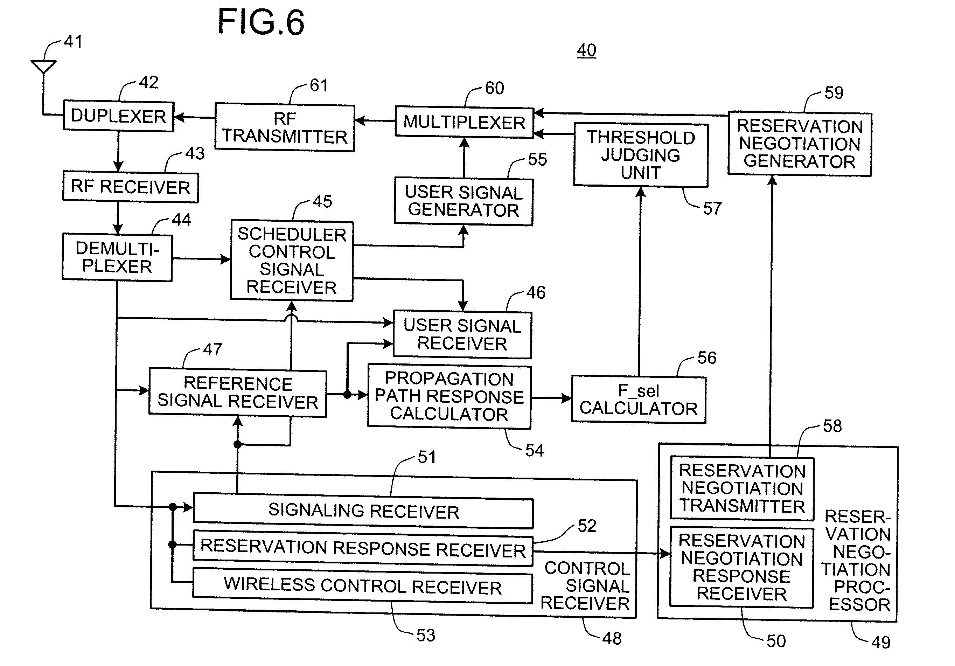

Fig. 6 is a block diagram of the user terminal. As depicted in Fig. 6, a user terminal 40 includes an antenna 41, a duplexer 42, an RF receiver 43, a demultiplexer 44, a scheduler control signal receiver 45, a user signal receiver 46, a reference signal receiver 47, and a control signal receiver 48.

A signal received by the antenna 41 is transmitted to the RF receiver 43 via the duplexer 42. The RF receiver 43 down-converts the signal, which has a carrier frequency, from the duplexer 42 into a baseband signal, and transmits the baseband signal to the demultiplexer 44. The demultiplexer 44 demultiplexes the baseband signal received from the RF receiver 43 according channel. The demultiplexed signals are sent to the scheduler control signal receiver 45, the user signal receiver 46, the reference signal receiver 47, and the control signal receiver 48.

The control signal receiver 48 includes a signaling receiver 51 and a wireless control receiver 53. The signaling receiver 51 estimates a reference signal insertion format, a scheduler control signal insertion format, etc. based on a control signal from the demultiplexer 44, and sends estimation information to the reference signal receiver 47 and the scheduler control signal receiver 45. The reference signal receiver 47 receives the reference signal from the demultiplexer 44 based on the insertion format estimated by the signal receiver 51.

The scheduler control signal receiver 45 receives a scheduler control signal from the demultiplexer 44 based on the insertion format estimated by the signaling receiver 51. The user signal receiver 46 estimates, based on scheduling information estimated by the scheduler control signal receiver 45, a format of a channel that includes a user signal, and decodes the user signal demultiplexed by the demultiplexer 44 and a propagation path response obtained from the reference signal. As a decoding technology, a known technology may be applied. The wireless control receiver 53 receives a control signal that comprehensively manages a wireless state.

The control signal receiver 48 includes a reservation response receiver 52. The user terminal 40 further includes a reservation negotiation processor 49. The reservation negotiation processor 49 includes a reservation negotiation response receiver 50. The reservation response receiver 52 extracts a response concerning application for reservation negotiation from the control signal received from the demultiplexer 44, and notifies the reservation negotiation response receiver 50 of the response. The reservation negotiation response receiver 50 receives the response. Although in the example depicted, a signal indicative of the response concerning an application for reservation negotiation corresponds to a part of the channel of the control signal, the signal may occupy an independent channel.

The user terminal 40 further includes a propagation path response calculator 54, a user signal generator 55, an F_sel calculator 56, a threshold judging unit 57, a reservation negotiation generator 59, a multiplexer 60, and an RF transmitter 61. The reservation negotiation processor 49 includes a reservation negotiation transmitter 58.

The propagation path response calculator 54 receives the reference signal from the reference signal receiver 47, and calculates a propagation path response, based on the reference signal. The F_sel calculator 56 calculates the F_sel, based on the propagation path response calculated by the propagation path response calculator 54. The threshold judging unit 57 judges whether the F_sel calculated by the F_sel calculator 56 is greater than a threshold (F_th). When the F_sel is greater than the threshold (F_th), the threshold judging unit 57 determines that the current reference signal insertion format cannot cope with frequency selectivity and transmits an F_sel signal to the multiplexer 60.

The user signal generator 55 generates a user signal according to a format of the scheduling information obtained from the scheduler control signal receiver 45 and transmits the signal to the multiplexer 60. The reservation negotiation transmitter 58 is activated by a user attempting to apply for reservation negotiation. When the reservation negotiation transmitter 58 is activated, the reservation negotiation generator 59 generates and transmits a predetermined signal to the multiplexer 60. The multiplexer 60 receives and multiplexes the signals transmitted from the user signal generator 55, the threshold judging unit 57 and the reservation negotiation generator 59, and transmits the multiplexed signal to the RF transmitter 61. The RF transmitter 61 up-converts a baseband signal supplied from the multiplexer 60 into a carrier frequency, and transmits the signal from the antenna 41 via the duplexer 42.

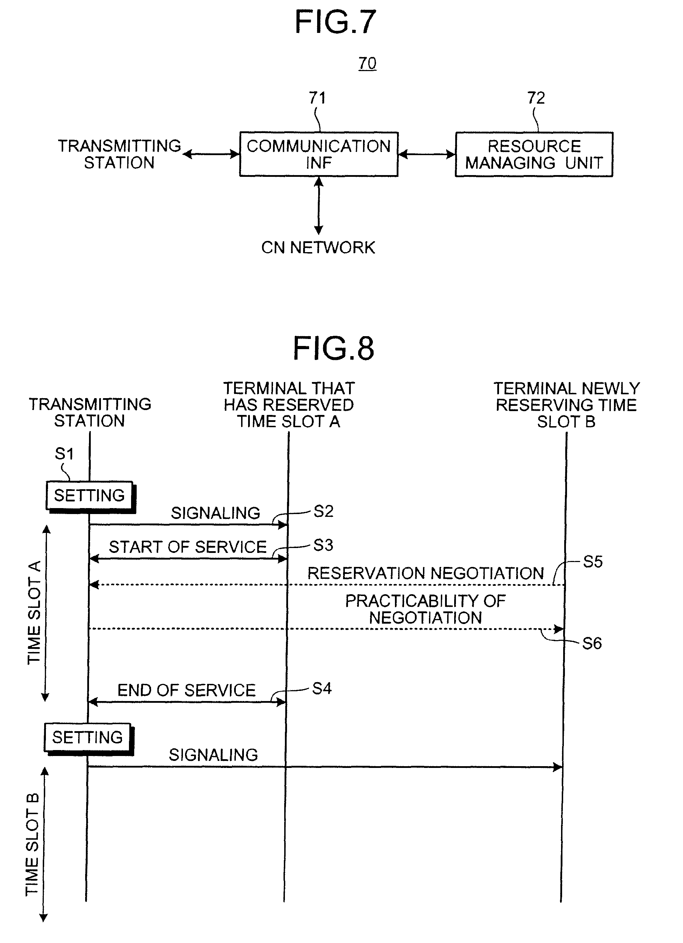

Fig. 7 is a block diagram of a management server. As depicted in Fig. 7, the management server 70 includes a communication interface 71 and a resource managing unit 72. The communication interface 71 communicates with the transmitting station 10 via a general-purpose or special communication protocol. When a preset communication time slot is switched or as required, the communication interface 71 notifies the transmitting station 10 of information concerning vacant bands, information concerning the N user terminals to which bands are assigned, and the latest information concerning a scheduler control signal band. The communication interface 71 is connected with a core network (CN) by using a general-purpose Internet Protocol (IP).

The resource managing unit 72 manages wireless resources of the operator and determines whether band assignment is possible upon a request for band assignment. The resource managing unit 72 notifies the transmitting unit 10 or the CN network of a result of the determination through the communication interface 71. The transmitting station 10 may include a function of the management server 70.

Fig. 8 is a sequence chart for making a new reservation in advance (static method for making a new reservation). As depicted in Fig. 8, a system that resets system operation at each reservation time slot (for example, "a time slot A", "a time slot B", ..., "a time slot A" for the next day) daily is assumed.

The transmitting station configures various kinds of settings including the reference signal insertion format based on equation (1) immediately before the time slot A begins (step S1). Subsequently, the transmitting station, via signaling, informs the communication terminal that has reserved the time slot A of information required to decode the reserved band (step S2). The signaling includes information specifying the reference signal insertion format. Service then begins between the transmitting station and the communication terminal that has reserved the time slot A (step S3). The service continues until and is terminated when the time slot A ends (step S4). A communication terminal attempting to newly reserve the time slot B applies for reservation negotiation with the transmitting station before the time slot B begins (step S5), and receives from the transmitting station, information indicating whether negotiation is success (step S6).

As a method for making a reservation in advance in this manner, a first reservation method for reserving band for a user terminal involves using a communication unit different from the user terminal that will use the band and a second reservation method involves making a reservation from the user terminal that will use the band. According to the first reservation method, a user accesses the management server that manages the wireless band of the system from, e.g., his/her home or office to execute reservation negotiation. According to the second reservation method, a user transmits a reservation signal to the transmitting station from the user terminal and accesses the management server through the transmitting station to execute reservation negotiation.

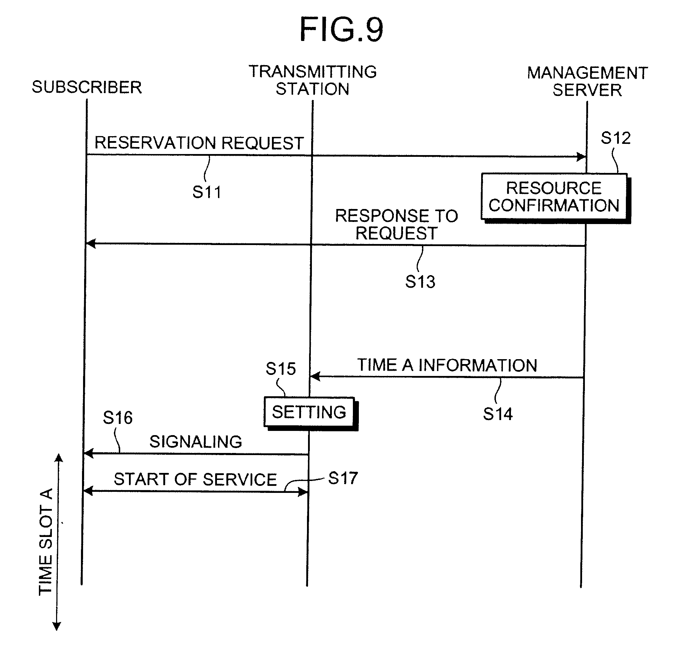

Fig. 9 is a sequence chart of the first reservation method. As depicted in Fig. 9, a subscriber directly makes, as a reservation request, an inquiry to the management server concerning desired band (step S11). The management server confirms wireless resources, and determines whether a band can be assigned (step S12). The management server informs the subscriber whether a band can be reserved (step S13). The management server further reports to the transmitting station, the latest information at the start of the time slot A (step S14). The transmitting station configures settings according to the latest information (step S15), reports information including the reference signal insertion format via signaling (step S16), and initiates service at the time slot A (step S17).

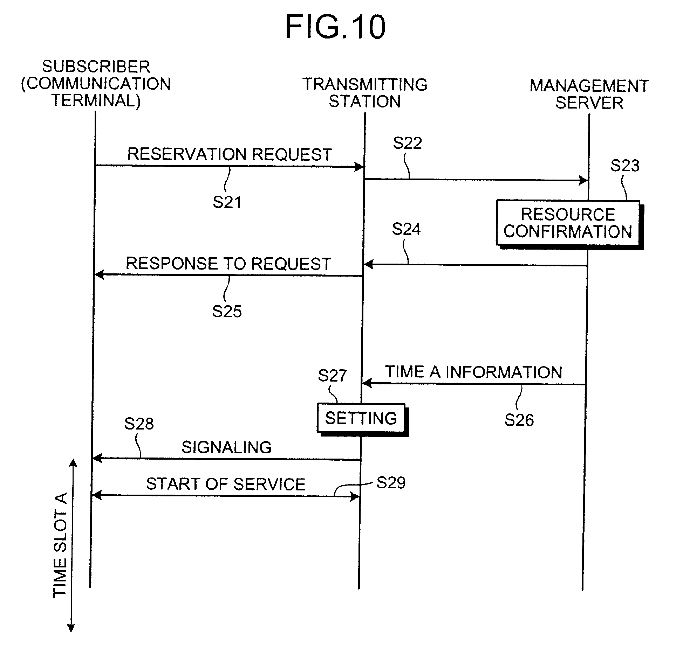

Fig. 10 is a sequence chart of the second reservation method. As depicted in Fig. 10, a subscriber uses a channel prepared in a wireless region to make, as a reservation request, an inquiry to the management server concerning desired band from his/her communication terminal through the transmitting station (step S21, step S22). The management server confirms wireless resources, and determines whether band can be assigned (step S23). Through the transmitting station, the management server notifies the subscriber of whether band can be reserved (step S24, step S25). Notification of the latest information concerning the time slot A (step S26), settings according to the latest information (step S27), signaling (step S28), and the start of service (step S29) is identical to that described with respect to steps S14 to S17. If band cannot be assigned to the subscriber by the first reservation method or the second reservation method, the management server may notify the subscriber of an assignable band.

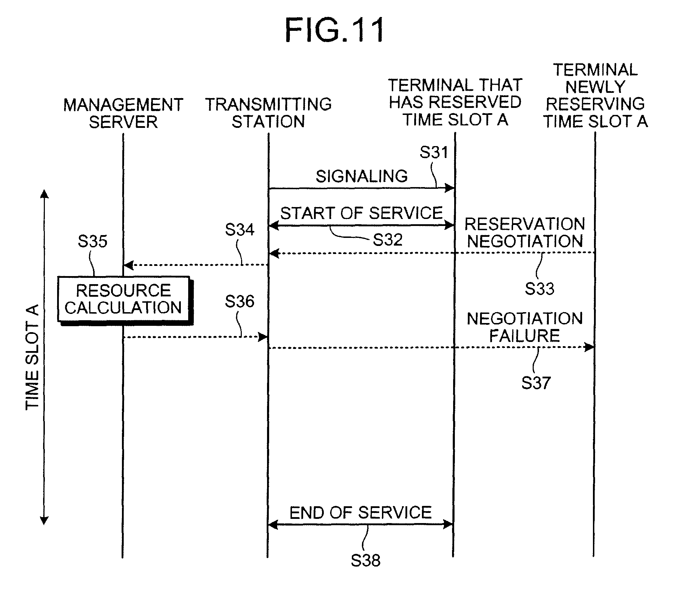

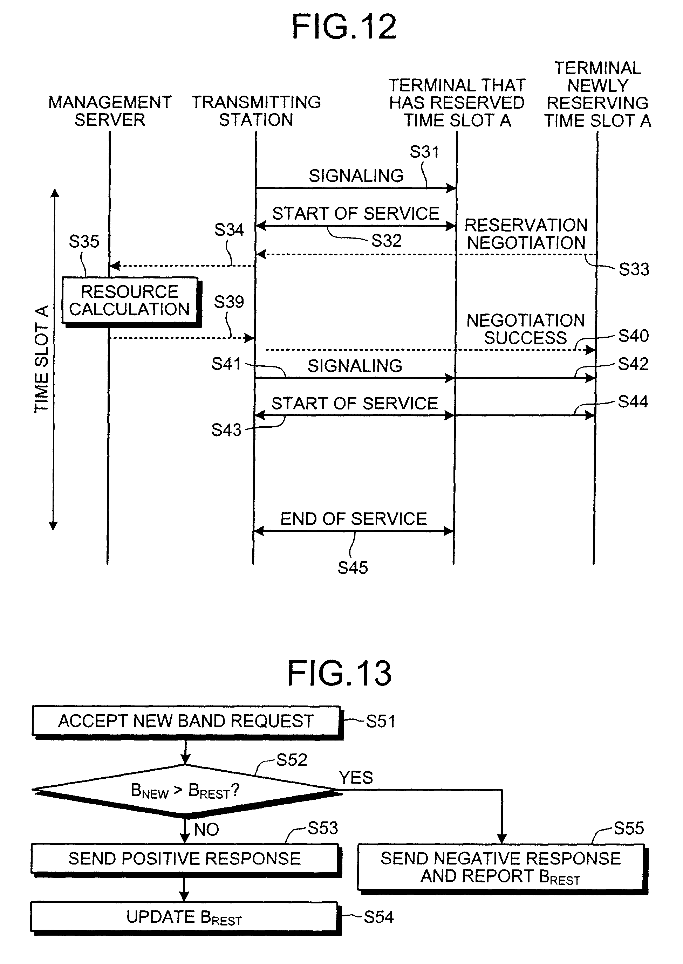

Figs. 11 and 12 are sequence charts for a method of newly making a reservation for a time slot during the time slot (dynamic method for making a new reservation). Fig. 11 depicts an example where reservation negotiation fails and a band cannot be assigned. As depicted in Fig. 11, the transmitting station, via signaling, reports information including a reference signal insertion format to the communication terminal that has reserved the time slot A (step S31), and commences service with the communication terminal (step S32).

During the time slot A, from a communication terminal and through the transmitting station, a communication terminal attempting to reserve the time slot A (terminal newly reserving the time slot A) negotiates with the management server for assignment of desired band (step S33, step S34). The management server calculates vacant bandwidth of among wireless resources, and determines whether a band can be assigned to the terminal newly reserving the time slot A (step S35). When the management server band determines that a band cannot be assigned, the management server accordingly notifies the terminal newly reserving the time slot A through the transmitting station (step S36, step S37). Further, the management server may inform a subscriber of an assignable band. The service between the transmitting station and the communication terminal that has preliminarily reserved the time slot A is terminated at the end of the time slot A (step S38).

Fig. 12 depicts an example where reservation negotiation is successful and a band is dynamically assigned. As depicted in Fig. 12, steps S31 to S35 are identical to those described with respect to failed negotiation as depicted in Fig. 11. When a band can be assigned to the terminal newly reserving the time slot A, the management server accordingly notifies the terminal newly reserving the time slot A through the transmitting station (step S39, step S40). Here, since band for a reference signal is changed, the transmitting station, by signaling, reports information including a new reference signal insertion format. The signaling is received by the communication terminal that has reserved the time slot A and the terminal newly reserving the time slot A (step S41, step S42). Consequently, service with the transmitting station and using a new transmission format begins respectively for the communication terminal that has reserved the time slot A and the terminal newly reserving the time slot A (step S43, step S44). The service during the time slot A is terminated at the end of the time slot A (step S45). This process is similarly applicable to an example where a subscriber directly negotiates with the management server concerning band assignment without using the transmitting station.

Fig. 13 is a flowchart of a resource management method in the management server. Concerning the flowchart, an algorithm is executed at respective steps, i.e., resource confirmation at steps S12 and S23, and resource calculation at step S35. The band assigned to the operator, the band for the control signal, the band for the scheduler control signal, the band for the reference signal, the bands assigned to the N user terminals, a currently assignable band(s) (vacant bands), and the band for a user terminal requesting a new reservation are $B_{OFE}$, $B_{SIG}$, $B_{SCD}$ (N), $B_{REF}$, $B_{EVER}$, $B_{REST}$, and $B_{NEW}$, respectively.

Vacant bandwidth $B_{REST}$ can be obtained based on equation (4) when there is no scheduler and can be obtained based on equation (5) when there is a scheduler.

$$B_{REST} = B_{OPE} - B_{SIG} - B_{REF} - B_{EVER} \tag{4}$$

$$B_{REST} = B_{OPE} - B_{SIG} - B_{REF} - B_{EVER} - B_{SCD} \tag{5}$$

As depicted in Fig. 13, when the management server newly accepts an assignment request for band $B_{NEW}$ from a user (step S51), the management server obtains $B_{REST}$ from equation (4) or equation (5). The management server then determines whether $B_{NEW}$ is greater than $B_{REST}$ (step S52). When $B_{NEW}$ is equal to or less than $B_{REST}$ (step S52: NO), the management server notifies the user that assignment is possible in response to the new band assignment request (step S53). The management server updates $B_{REST}$ after new band assignment (step S54). When $B_{NEW}$ is greater than $B_{REST}$ (step S52: YES), the management server notifies the user that assignment is not possible in response to the new band assignment request (step S55).

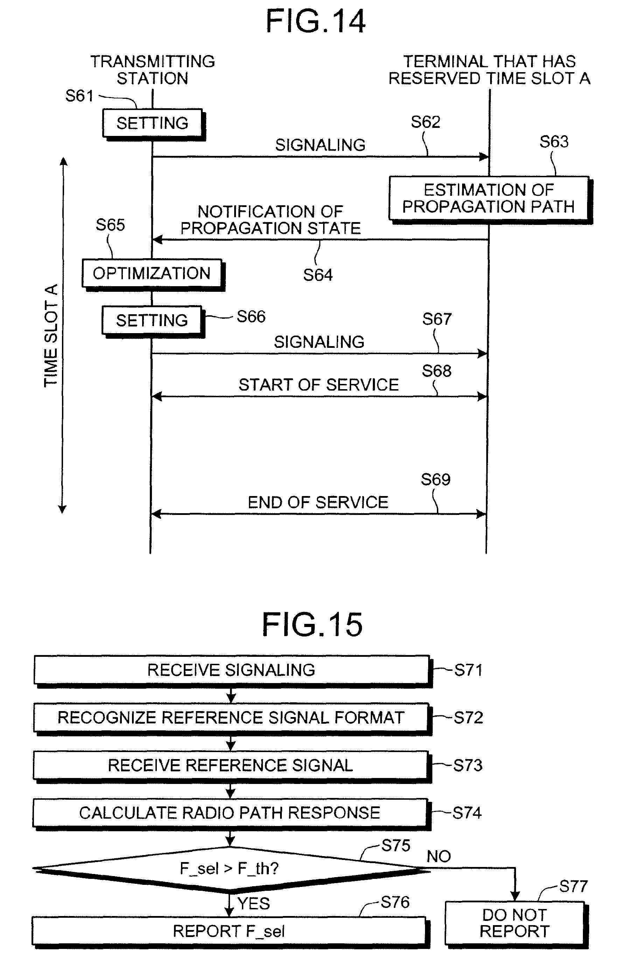

Fig. 14 is a sequence chart when radio path training is executed. As depicted in Fig. 14, identical to steps S1 and S2, the transmitting station sets a reference signal insertion format (step S61), and reports the format via signaling (step S62). Subsequently, the communication terminal that has reserved the time slot A estimates a propagation path by using a reference signal, and calculates a response for the radio path (step S63). If the communication terminal that has reserved the time slot A is to perform notification, the communication terminal notifies the transmitting station of required parameters, as a propagation state (step S64). The foregoing steps apply any other communication terminal that has reserved the time slot A.

The transmitting station performs optimization and obtains the $F\_sel_{TH}$ based on the supplied propagation state information (step S65). The transmitting station resets the reference signal insertion format (step S66), and again performs the signaling of particulars of the format (step S67). The transmitting station and the communication terminal that has reserved time slot A start service based on the changed reference signal insertion format (step S68), and terminate the service at the end of the time slot A (step S69).

Fig. 15 is a flowchart of a propagation path estimation method. Concerning the flowchart, an algorithm is executed at step S63. As depicted in Fig. 15, upon receiving the signaling from the transmitting station, the communication terminal that has reserved the time slot A recognizes the reference signal insertion format (step S72), and receives a reference signal based on this insertion format (step S73). The communication terminal that has reserved the time slot A estimates a propagation path by using the reference signal, and calculates a radio path response (step S74).

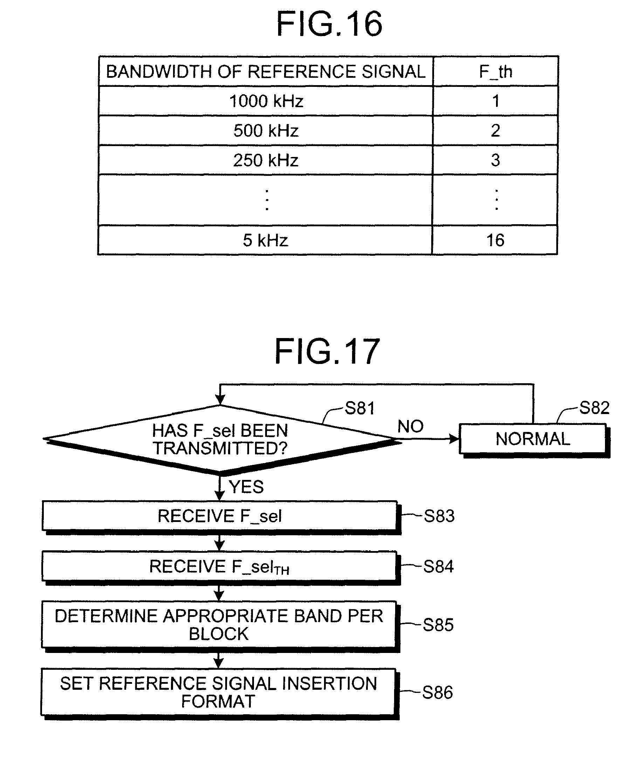

The communication terminal that has reserved the time slot A calculates the F_sel based on the propagation path response and determines whether the F_sel is greater than the F_th (step S75). The F_th is obtained from the reference signal insertion format at the time. For example, F_th's and bandwidths of one reference signal are paired and determined in advance. Fig. 16 depicts examples of corresponding bandwidths of one reference signal and F_th's. When the F_sel is greater than the F_th (step S75: YES), the communication terminal that has reserved the time slot A notifies the transmitting station of the F_sel (step S76). When the F_sel is equal to or less than the F_th (step S75: NO), the communication terminal that has reserved the time slot A does not report the F_sel (step S77). The communication terminal that has reserved the time slot A may continuously notify the transmitting station of a propagation state.

Fig. 17 is a flowchart of optimization and an insertion format resetting method. Concerning the flowchart, an algorithm is executed at steps S65 and S66. As depicted in Fig. 17, the transmitting station determines whether the F_sel has been transmitted from the communication terminal that has reserved the time slot A (step S81). If the F_sel has not been transmitted (step S81: NO), the transmitting station determines that nothing is errant (step S82) and monitors transmission of the F_sel.

If the F_sel is transmitted (step S81: YES), the transmitting station receives the F_sel (step S83), and performs calculation based on a predetermined algorithm to obtain the $F\_sel_{TH}$ (step S84). The transmitting station determines the bandwidth of one reference signal suitable for the $F\_sel_{TH}$ (step S85), and resets the reference signal insertion format (step S86) as necessary. Steps S81 and S82 are omitted when the communication terminal that has reserved the time slot A continuous notifies the transmitting station of a propagation state.

In the configuration described, the transmitting station 10 and the user terminal 40 correspond to a transmitter and a receiver, respectively. The setting unit 12, the reference signal generator 14, the multiplexer 17, and the signaling generator 21 in the transmitting station 10 have functions as a setting unit, a generating unit, a multiplexing unit, and a signaling unit, respectively. The F_sel receiver 26, the $F\_sel_{TH}$ calculator 27, and the block determining unit 28 in the transmitting station 10 have a function as a resetting unit. The propagation path response calculator 54, the F_sel calculator 56, and the threshold judging unit 57 in the user terminal 40 have a function as a requesting unit. The reservation negotiation transmitter 58 and the reservation negotiation generator 59 in the user terminal 40 have a function as a negotiating unit. The reservation negotiation response receiver 50 and the reservation response receiver 52 in the user terminal 40 have a function as a responding unit.

As explained, according to the embodiment, in the band assigned to the operator, since a reference signal is assigned to a band(s) exclusive of the band for a control signal, the bands assigned to users, etc., the reference signal can be accurately inserted. When ensuring band for wireless communication with respect to a user, effectively utilizing band exclusive of the band for the control signal, the bands utilized by users, etc., as band to which the reference signal is assigned enables taking advantage of wireless band, which is a valuable and finite resource. A reference signal insertion format can be report using a small amount of data. Signal quality can be maintained by the simple control technique.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of embodiments of the invention. Although the embodiment(s) of the present inventions have been described in detail, it should be understood that the various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

**1.** A channel inserting method comprising:

calculating, based on a band of an assigned channel, vacant bandwidth that is assignable to a reference signal;

and
setting an insertion format of the reference signal based on the vacant bandwidth.

2. The channel inserting method according to claim 1, further comprising reporting, in advance, the insertion format via signaling.

3. The channel inserting method according to claim 2, wherein the reporting includes reporting the insertion format as an insertion interval of the reference signal or a bandwidth of the reference signal.

4. The channel inserting method according to any of claims 1 to 3, further comprising:

   adjusting, dynamically, a band of the assigned channel according to user traffic, wherein
   the setting includes setting the insertion format according to a band assignment state.

5. The channel inserting method according to any of claims 1 to 4, further comprising:

   acquiring information concerning a radio wave propagation environment of the assigned channel; and
   resetting the insertion format, based on the information.

6. A transmitter comprising:

   a setting unit that calculates vacant bandwidth that is assignable to a reference signal, based on a band of an assigned channel and sets an insertion format of the reference signal, based on the vacant bandwidth;
   a generating unit that generates the reference signal, based on the insertion format set by the setting unit; and
   a multiplexing unit that multiplexes the reference signal generated by the generating unit and other signals.

7. The transmitter according to claim 6, further comprising a signaling unit that reports the insertion format via signaling.

8. The transmitter according to claim 7, wherein the signaling unit reports an insertion interval of the reference signal or a bandwidth of the reference signal as the insertion format.

9. The transmitter according to any of claims 6 to 8, wherein the setting unit dynamically adjusts a band of the assigned channel according to user traffic and sets the insertion format according to a band assignment state.

10. The transmitter according to any of claims 6 to 9, further comprising a resetting unit that acquires information concerning a radio wave propagation environment of the assigned channel and resets the insertion format based on the information.

11. A receiver comprising a requesting unit that estimates radio wave propagation based on a reference signal received and requests resetting of an insertion format of the reference signal based on a result of estimation.

12. The receiver according to claim 11, further comprising:

   a negotiating unit that performs reservation negotiation for channel assignment; and
   a responding unit that receives a response to the reservation negotiation performed by the negotiating unit.

# FIG.1

BAND ASSIGNED TO OPERATOR

FREQUENCY

# FIG.2

BAND ASSIGNED TO OPERATOR

FREQUENCY

# FIG.3

INSERTION INTERVAL OF REFERENCE SIGNAL

BANDWIDTH OF REFERENCE SIGNAL

BAND ASSIGNED TO OPERATOR

FREQUENCY

# FIG.4

BAND ASSIGNED TO OPERATOR

FREQUENCY

# FIG.5

EP 2 136 502 A2

# FIG.6

EP 2 136 502 A2

# FIG.7

70

71                                          72

TRANSMITTING
STATION ⟷ COMMUNICATION
INF ⟷ RESOURCE
MANAGING UNIT

⟷

CN NETWORK

# FIG.8

TRANSMITTING
STATION

TERMINAL THAT
HAS RESERVED
TIME SLOT A

TERMINAL NEWLY
RESERVING TIME
SLOT B

S1

SETTING

SIGNALING — S2

START OF SERVICE — S3

RESERVATION NEGOTIATION — S5

PRACTICABILITY OF
NEGOTIATION

S6

TIME SLOT A

END OF SERVICE — S4

SETTING

SIGNALING

TIME SLOT B

# FIG.9

SUBSCRIBER     TRANSMITTING STATION     MANAGEMENT SERVER

RESERVATION REQUEST

S11

S12

RESOURCE CONFIRMATION

RESPONSE TO REQUEST

S13

S15

TIME A INFORMATION

S14

SETTING

S16

SIGNALING

START OF SERVICE    S17

TIME SLOT A

# FIG.10

| SUBSCRIBER (COMMUNICATION TERMINAL) | TRANSMITTING STATION | MANAGEMENT SERVER |

RESERVATION REQUEST

S22

S23

S21

RESOURCE CONFIRMATION

S24

RESPONSE TO REQUEST

S25

S27

TIME A INFORMATION

SETTING

S26

S28

SIGNALING

START OF SERVICE

S29

TIME SLOT A

# FIG.11

# FIG.12

MANAGEMENT SERVER | TRANSMITTING STATION | TERMINAL THAT HAS RESERVED TIME SLOT A | TERMINAL NEWLY RESERVING TIME SLOT A

TIME SLOT A

S31

SIGNALING

START OF SERVICE

S34　S32　RESERVATION NEGOTIATION

S35

RESOURCE CALCULATION　S39

S33

NEGOTIATION SUCCESS　S40

S41　SIGNALING　S42

START OF SERVICE　S44

S43

END OF SERVICE

S45

# FIG.13

ACCEPT NEW BAND REQUEST — S51

S52

$B_{NEW} > B_{REST}$?

YES

NO　S53

SEND POSITIVE RESPONSE

SEND NEGATIVE RESPONSE AND REPORT $B_{REST}$ — S55

UPDATE $B_{REST}$ — S54

# FIG.14

TRANSMITTING
STATION

TERMINAL THAT HAS
RESERVED TIME SLOT A

S61

| SETTING |

S62
SIGNALING

S63

| ESTIMATION OF
PROPAGATION PATH |

S65

NOTIFICATION OF
PROPAGATION STATE

| OPTIMIZATION |

S64

| SETTING | S66

S67
SIGNALING

S68
START OF SERVICE

TIME SLOT A

S69
END OF SERVICE

# FIG.15

| RECEIVE SIGNALING | ─S71

| RECOGNIZE REFERENCE SIGNAL FORMAT | ─S72

| RECEIVE REFERENCE SIGNAL | ─S73

| CALCULATE RADIO PATH RESPONSE | ─S74

S75

$F\_sel > F\_th?$　　NO

YES　S76

S77

| REPORT F_sel |

| DO NOT
REPORT |

# FIG.16

| BANDWIDTH OF REFERENCE SIGNAL | F_th |
|---|---|
| 1000 kHz | 1 |
| 500 kHz | 2 |
| 250 kHz | 3 |
| ⋮ | ⋮ |
| 5 kHz | 16 |

# FIG.17

```
        ┌──────────────────────────────────────────────────┐
        │                                                  │
        ▼                                                  │
  ╱─────────────────╲   ──S81                           ──S82
 ╱  HAS F_sel BEEN   ╲      NO      ┌──────────────────┐
 ╲  TRANSMITTED?     ╱ ─────────────▶│     NORMAL       │
  ╲─────────────────╱               └──────────────────┘
        │ YES
        ▼
 ┌────────────────────────────┐
 │       RECEIVE F_sel        │──S83
 └────────────────────────────┘
        │
        ▼
 ┌────────────────────────────┐
 │      RECEIVE F_sel_TH      │──S84
 └────────────────────────────┘
        │
        ▼
 ┌────────────────────────────┐
 │ DETERMINE APPROPRIATE BAND │──S85
 │        PER BLOCK           │
 └────────────────────────────┘
        │
        ▼
 ┌────────────────────────────┐
 │ SET REFERENCE SIGNAL       │──S86
 │ INSERTION FORMAT           │
 └────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003244219 A

- JP 2006245958 A